# EUROPEAN PATENT APPLICATION

(11) **EP 2 503 455 A2**
(43) Date of publication of application: **26.09.2012**
(21) Application number: 11170633.9
(22) Date of filing: 21.06.2011
(51) Int. Cl.: G06F 9/44, G06F 9/445

(54) **Method for customizing user interface and electronic device thereof**

(30) Priority: 24.03.2011 TW 100110161
(71) Applicant: Acer Incorporated, New Taipei City 221 (TW)
(72) Inventor: Yeung, Sip Kim, 221 New Taipei City (TW)
(74) Representative: Chamberlain, Alan James

(57) **Abstract**

A method for customizing a user interface and an electronic device thereof are provided. In the present method, if a first input signal is detected when an active window corresponding to an application program is displayed on a screen of the electronic device, an operating screen of the active window is captured and the active window is closed. A launching mechanism between the operating screen and a thumbnail thereof is established. The thumbnail is added to a home screen of the electronic device, and the home screen is displayed on the screen. Thereby, the performance of the electronic device is improved by ensuring that system resources won't be occupied by a closed window.

## Description

### CROSS-REFERENCE TO RELATED APPLICATION

This application claims the priority benefit of Taiwan application serial no. 100110161, filed March 24, 2011. The entirety of the above-mentioned patent application is hereby incorporated by reference herein and made a part of this specification.

### BACKGROUND OF THE INVENTION

### 1. Field of the Invention

The invention generally relates to a user interface, and more particularly, to a method for customizing a user interface and an electronic device thereof.

### 2. Description of Related Art

Along with the advancement of mobile technologies, mobile device manufacturers have been putting more and more emphasis on the design of user interfaces besides the functionality of the mobile devices themselves. Most existing smart phones allow their users to place icons of those frequently used application programs in the home screens so that those application programs can be conveniently used. In addition, some smart phones allow their users to add desired widgets into the home screen to make the operation more interesting.

However, a user can only get to know about the function of an application program through the icon and text description of the application program but not the status when last time the application program is used for opening a file or executing a function from the home screen. In other words, the user has to tap the icon and start the application program to see the status of the previous operation. On the other hand, even though a widget can display information without being tapped by a user, when both the icon and widget of an application program exist in a home screen, the user may be confused by these two different information displays.

Moreover, in many different operation modes of a smart phone, if a presently executed application program is exited and the home screen is returned, even though the operating screen of the application program is not displayed on the screen, the application program is still executed by the system instead of being really closed. For example, assuming that a user executes a text editor program in a smart phone, when the user finishes editing a text file and returns to the home screen and starts a multimedia player program, because the text editor program is still executed at the background while the user executes the multimedia player program to watch a movie, the text editor program occupies the memory resource and accordingly the performance of the entire system is reduced.

### SUMMARY OF THE INVENTION

Accordingly, the invention is directed to a method for customizing a user interface and an electronic device thereof, wherein a user is allowed to understand the operation progress of an application program from a home screen, and the performance of the electronic device is improved by reducing system resource consumption.

The invention provides a method for customizing a user interface. The method is adapted to an electronic device having a screen. In the present method, whether a first input signal is detected is determined when an active window corresponding to an application program is displayed on the screen. If the first input signal is detected, an operating screen of the active window is captured, and the active window is then closed. A launching mechanism between the operating screen and a thumbnail thereof is established. The thumbnail is added to a home screen of the user interface, and the home screen is displayed on the screen.

According to an embodiment of the invention, the electronic device further includes a primary memory and an auxiliary memory, and the step of closing the active window includes obtaining an operating information corresponding to the active window from the primary memory, storing the operating information into the auxiliary memory, and releasing the space allocated for the active window in the primary memory in order to close the active window.

The invention provides an electronic device including a screen, a detection module, and a control module. The screen is arranged for displaying an active window corresponding to an application program. The detection module is arranged for detecting a first input signal. The control module is coupled to the screen and the detection module. When the detection module detects the first input signal, the control module is arranged for capturing an operating screen of the active window, closing the active window, establishing a launching mechanism between the operating screen and a thumbnail thereof, adding the thumbnail to a home screen of a user interface, and displaying the home screen on the screen.

As described above, in the invention, an operating screen of an active window is captured, and a thumbnail of the operating screen is added to a home screen of an electronic device, so that a user can get to know about the operation progress of the application program when last time the application program is closed from the thumbnail in the home screen. Additionally, in the invention, the active window is closed right after the operating screen is captured, so that less system resource is consumed.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram of an electronic device according to an embodiment of the invention.

FIG. 2 is a flowchart of a method for customizing a user interface according to an embodiment of the invention.

FIG. 3 is a block diagram of an electronic device according to another embodiment of the invention.

FIG. 4 is a flowchart of a method for customizing a user interface according to another embodiment of the invention.

FIG. 5A is a diagram of a home screen according to another embodiment of the invention.

FIG. 5B is a diagram of an operating screen according to another embodiment of the invention.

FIG. 5C is a diagram of a home screen according to another embodiment of the invention.

FIG. 5D is a diagram of a home screen according to another embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

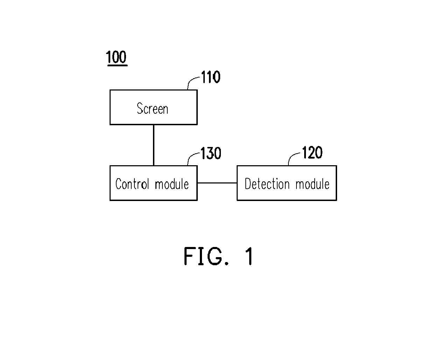

FIG. 1 is a block diagram of an electronic device according to an embodiment of the invention. Referring to FIG. 1, the electronic device 100 includes a screen 110, a detection module 120, and a control module 130. In the present embodiment, the electronic device 100 is a mobile electronic device, such as a cell phone, a smart phone, a personal digital assistant (PDA), or a table PC. However, the invention is not limited thereto, and in other embodiments, the electronic device 100 may be any electronic device having a screen and a central processing unit (CPU), such as a desktop computer, a notebook computer, a smart phone, a PDA, or a mainframe.

The screen 110 is coupled to the control module 130, and which is a device offering a display function, such as a liquid crystal display (LCD), a capacitive touch screen, a resistive touch screen, or an optical touch screen.

The detection module 120 is coupled to the control module 130, and which is a device for detecting user input operations. For example, the detection module 120 may be an electronic device for detecting signals generated by user input operations.

The control module 130 generates a user interface of the electronic device 100 according to signals detected by the detection module 120. In the present embodiment, the control module 130 is a functional module implemented with hardware and/or software, wherein the hardware may be one or a combination of a CPU, a chipset, a microprocessor, and other hardware devices with operation functions, and the software may be an operating system (OS) or a driver program.

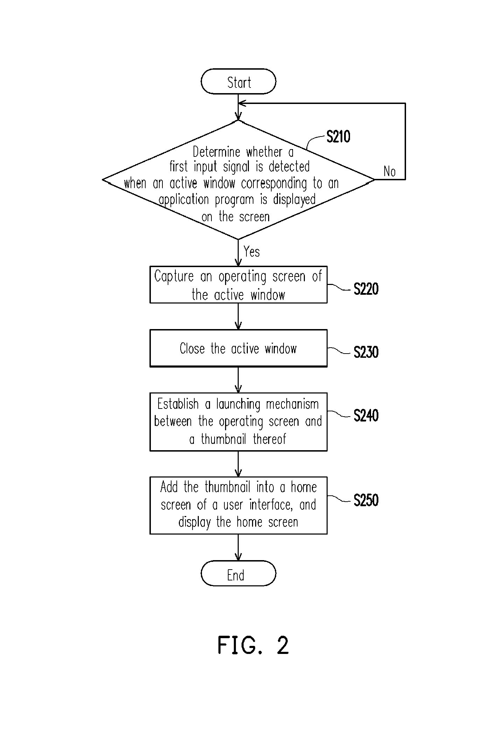

Below, the operation of the electronic device 100 will be described in detail with reference to another embodiment of the invention. FIG. 2 is a flowchart of a method for customizing a user interface according to an embodiment of the invention. Please refer to both FIG. 1 and FIG. 2.

First, in step S210, when an active window corresponding to an application program is displayed on the screen 110, the detection module 120 repeatedly determines whether a first input signal is detected. To be specific, a user can start one or more application programs or open more than one window by using the same application program in the electronic device 100, wherein an active window refers to the window which is presently displayed on top of other windows and can receive user operations. In the present embodiment, the tool bar of the active window has a specific icon, and the detection module 120 detects a first input signal when the user taps the specific icon by using an input tool. In other embodiments, the first input signal may also be triggered when the user taps a specific software button on the screen 110 or a specific hardware button of the electronic device 100.

Once the detection module 120 detects the first input signal, in step S220, the control module 130 captures an operating screen of the current active window. Namely, all the operations performed by the user on the active window before the first input signal is triggered are reflected in the operating screen captured by the control module 130.

For example, when the application program corresponding to the active window is a text editor program, the operating screen captured by the control module 130 presents the current edit progress of a text file. Assuming that the user is editing the 10^{th} line of the text file when the first input signal is triggered, the operating screen captured by the control module 130 displays information indicating that the 10^{th} line is being edited. When the application program corresponding to the active window is a multimedia player software, the operating screen captured by the control module 130 presents the current playing progress of a multimedia file. Assuming that the user is watching an image at 20 minutes of a movie file when the first input signal is triggered, the operating screen captured by the control module 130 shows the content of the movie file at 20 minutes. When the application program corresponding to the active window is an instant messaging software, the operating screen captured by the control module 130 presents a conversation image (including the conversation object and the conversation content, etc) of the user by using the instant messaging software. It should be noted that after capturing the operating screen, the control module 130 also generates a thumbnail corresponding to the operating screen. The thumbnail may be in the Joint Photographic Experts Group (JPEG) format or the bitmap format. However, the format of the thumbnail is not limited in the invention.

Next, in step S230, the control module 130 closes the active window to release the system resources it occupies. In step S240, the control module 130 establishes a launching mechanism between the thumbnail and the operating screen. In the last step S250, the control module 130 adds the thumbnail into a home screen of the user interface of the electronic device 100 and controls the screen 110 to display the home screen. Through the establishment of the launching mechanism between the thumbnail and the operating screen, the thumbnail displayed in the home screen can start a corresponding application program in response to a user operation.

As shown in FIG. 2, when the user triggers the first input signal, the control module 130 closes the current active window and displays a thumbnail in the home screen of the electronic device 100. Because the control module 130 actually closes the current active window instead of running the window at the background, the system resources occupied by the window can be released and accordingly the system performance can be improved. Besides, the control module 130 does not update the thumbnail after displaying the thumbnail in the home screen. Thus, no additional CPU resource is required. In another embodiment of the invention, the control module 130 powers off related devices after closing an active window. Thereby, the power consumption of the electronic device 100 can be reduced.

Because the thumbnail generated by the control module 130 is corresponding to the operating screen of the active window when the first input signal is triggered, even when the window is closed, the user can still see the content of the operation previously performed on the window in the home screen and tap the thumbnail in the home screen to re-open the window (the detail operation for opening the window will be explained later on with reference to accompanying drawings). In other words, the thumbnail displayed in the home screen can offer an effect similar to that of a widget. The user can not only see frequently used or recently opened files in the home screen but also understand the context of previously using an application program through the corresponding thumbnail without actually executing the application program. In the present embodiment, the user may feel like the windows are open (however, the windows are actually closed) at the same time when the consumption of system resources is reduced and the performance of the electronic device 100 is improved.

It should be mentioned that the method for customizing a user interface illustrated in FIG. 2 can generate two (or more) thumbnails corresponding to the same type of application program in the home screen, wherein these thumbnails are respectively corresponding to different windows. For example, a user can edit two files (for example, a first file and a second file) at the same time by using a text editor program. When the window corresponding to the first file is an active window, the electronic device 100 displays a thumbnail corresponding to the first file in the home screen through the steps in FIG. 2. Subsequently, if the user triggers a first input signal when the window corresponding to the second file is the current active window, the electronic device 100 displays a thumbnail corresponding to the second file in the home screen through the steps in FIG. 2. Thereby, the user can see thumbnails corresponding to two files edited by using the same application program in the home screen and can open different files by tapping at different thumbnails in the home screen.

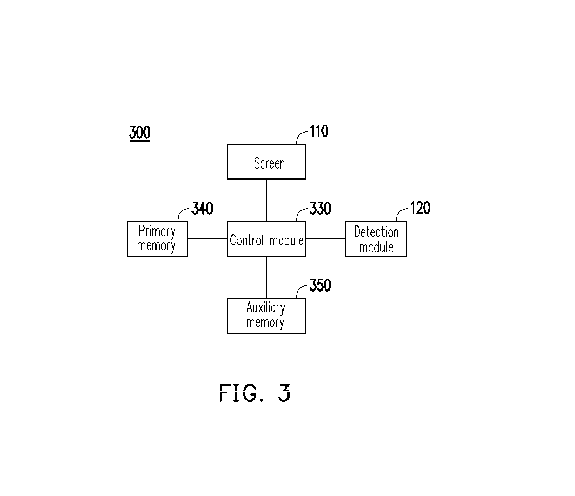

FIG. 3 is a block diagram of an electronic device according to another embodiment of the invention. As shown in FIG. 3, the electronic device 300 includes a screen 110, a detection module 120, a control module 330, a primary memory 340, and an auxiliary memory 350. The electronic device 300 is similar to the electronic device 100 illustrated in FIG. 1, and only the differences between the two electronic devices will be explained below.

Referring to FIG. 3, in the present embodiment, the screen 110, the detection module 120, the primary memory 340, and the auxiliary memory 350 are all coupled to the control module 330. The primary memory 340 includes a random access memory (RAM), and the auxiliary memory 350 may be a storage device, such as an embedded multi media card (eMMC) or a hard disk.

To be specific, the primary memory 340 is a storage device that can be directly accessed by the CPU of the electronic device 300. The primary memory 340 is configured to load different programs and data to be used by the CPU. Namely, operating information related to any program supported by the electronic device 300 is loaded into the primary memory 340 when the program is executed. If different application programs are run or different files are opened by using the same application program at the same time, insufficient memory space in the primary memory 340 may be caused if all related operating information is loaded into the primary memory 340. In this case, part of the information loaded into the primary memory 340 has to be swapped out into the auxiliary memory 350, so as to vacate the space of the primary memory 340 for other application programs. In other words, the performance of the electronic device 300 is affected when there is insufficient space in the primary memory 340.

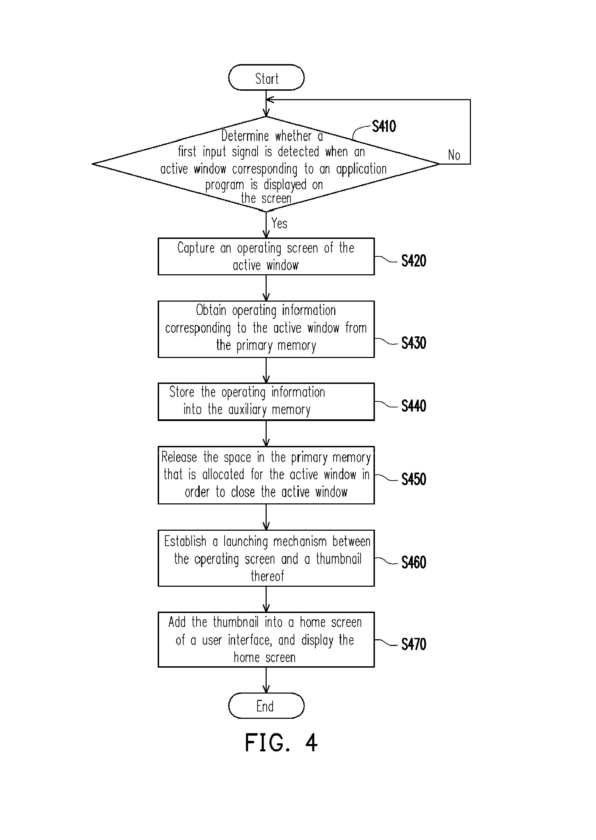

In order to avoid the situation described above, in following embodiment, the control module 330 stores operating information previously stored in the primary memory 340 into the auxiliary memory 350 while it closes an active window. Below, the operation of the electronic device 300 will be described in detail with reference to both FIG. 3 and FIG. 4.

In step S410, when an active window corresponding to an application program is displayed on the screen 110, the detection module 120 repeatedly determines whether a first input signal is detected (for example, determines whether a user taps a specific icon in the active window). When the detection module 120 detects the first input signal, in step S420, the control module 330 captures an operating screen of the active window.

Then, in step S430, the control module 330 obtains operating information corresponding to the active window from the primary memory 340. The operating information is all context information of the active window. For example, when the application program is a multimedia player program, the operating information of the corresponding active window includes the file name of the currently played multimedia file and the playing progress thereof. If the application program is a text editor program, the operating information of the corresponding active window includes the file name of the edited file and the edited content. If the application program is an instant messaging software, the operating information of the corresponding active window includes account information such as a contact list and conversation records. If the application program is a browser, the operating information of the corresponding active window includes the browsed web address, the webpage content, and the position in the webpage at where the user is currently browsing.

Next, in step S440, the control module 330 stores the operating information corresponding to the active window into the auxiliary memory 350. In step S450, the control module 330 releases the space in the primary memory 340 that is allocated for the active window in order to close the active window. It should be noted that the control module 330 actually closes the active window instead of running it at the background.

In the present embodiment, the control module 330 generates the thumbnail of the captured operating screen during steps S430-S450. However, in other embodiments, the control module 330 may also generate the thumbnail of the operating screen before or after aforementioned steps.

After that, in step S460, the control module 330 establishes a launching mechanism between the thumbnail and the operating screen. In the last step S470, the control module 330 adds the thumbnail into the home screen of the user interface of the electronic device 300 and displays the home screen on the screen 110.

For example, if the user triggers a first input signal when the user edits a file by using a text editor program, the image displayed on the screen 110 is switched from the file editing window to the home screen, and the home screen displays a thumbnail corresponding to the editing progress. Because the operating information related to file editing is already moved from the primary memory 340 to the auxiliary memory 350 through steps S430-S450 in FIG. 4, it is ensured that the previous active window is actually closed and not executed in the system anymore when the screen 110 displays the home screen, so that less system source is consumed and the operation efficiency of the electronic device 300 is improved.

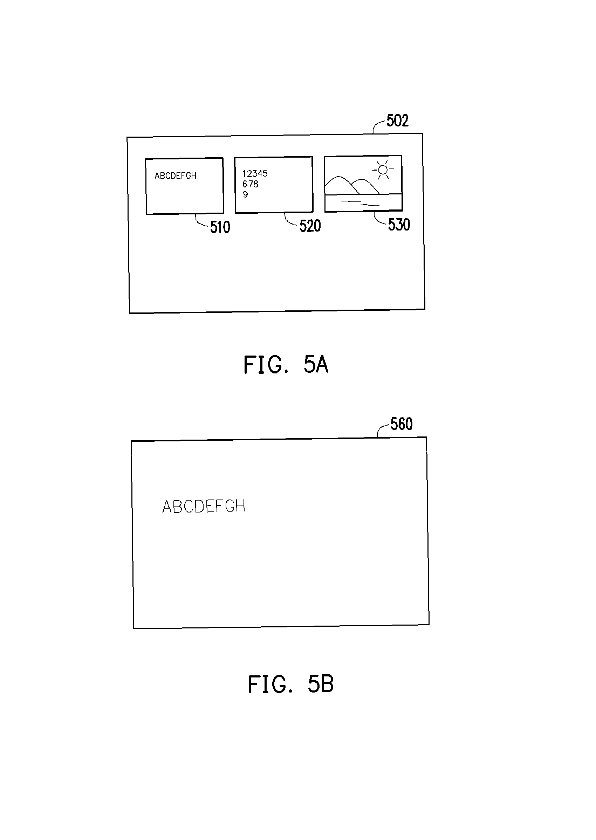

Below, the operation of the electronic device 300 when a user is about to open a window by using the corresponding thumbnail or manage the thumbnail after a home screen with several thumbnails is established through the steps in FIG. 4 will be described with reference to FIG. 3 and FIGs. 5A-5D.

As shown in FIG. 5A, in the present embodiment, it is assumed that the home screen 502 has three thumbnails generated through the steps in FIG. 4. The first thumbnail 510 is a thumbnail corresponding to a first text file opened by using a text editor program, the second thumbnail 520 is a thumbnail corresponding to a second text file opened by using the text editor program, and the third thumbnail 530 is a thumbnail corresponding to a first picture file opened by using a picture browsing software.

When the screen 110 of the electronic device 300 displays the home screen 502, the detection module 120 repeatedly determines whether a second input signal corresponding to any thumbnail is detected. Herein the second input signal may be triggered when a user taps a thumbnail in the home screen 502 by using an input tool.

If the detection module 120 detects a second input signal corresponding to the first thumbnail 510 (for example the user taps the first thumbnail 510 in the home screen 502), the control module 330 executes a launching mechanism between the first thumbnail 510 and the operating screen thereof to load the operating information related to the first thumbnail 510 from the auxiliary memory 350 into the primary memory 340 and presents the operating screen (such as the operating screen 560 illustrated in FIG. 5B) of the first text file when last time the first text file is closed on the screen 110 according to the operating information through the text editor program.

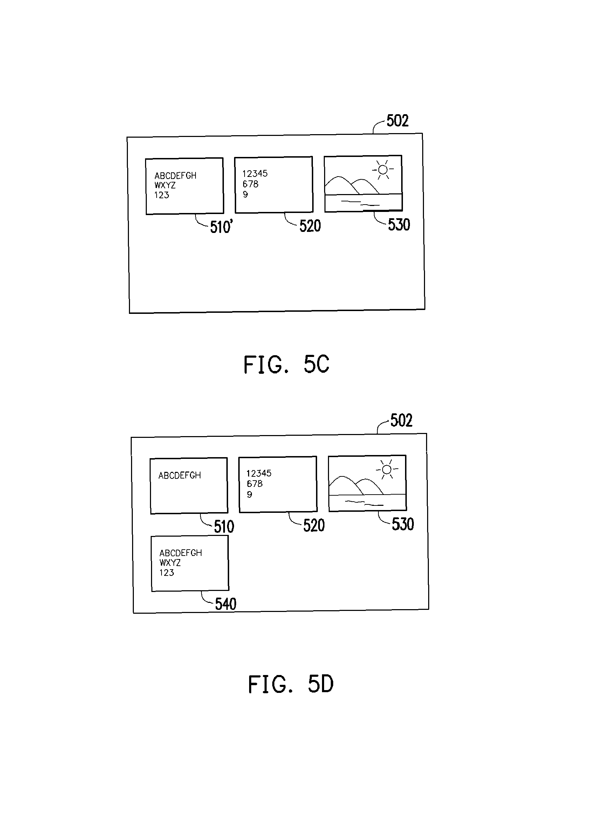

When the screen 110 displays the operating screen 560 (i.e., the window corresponding to the first text file is an active window), the user can continue to edit the first text file through the text editor program. In an embodiment of the invention, if the user triggers another first input signal, the control module 330 updates the old operating information of the first text file in the auxiliary memory 350 by using the new operating information thereof in the primary memory 340 and releases the space for storing the new operating information in the primary memory 340. Besides, as shown in FIG. 5C, the control module 330 overwrites the old first thumbnail 510 by using a new thumbnail 510' corresponding to the new editing progress in the home screen 502.

In another embodiment of the invention, the control module 330 keeps the old operating information in the auxiliary memory 350 and stores the new operating information in the primary memory 340 into the auxiliary memory 350. After that, the control module 330 releases the space for storing the new operating information in the primary memory 340. Accordingly, as shown in FIG. 5D, the control module 330 retains the first thumbnail 510 in the home screen 502 and displays a fourth thumbnail 540 to present the new editing progress. Because the first thumbnail 510 and the fourth thumbnail 540 in the home screen 502 are corresponding to two different editing progresses of the first text file, when the user taps the first thumbnail 510 or the fourth thumbnail 540 in the home screen 502, the control module 330 respectively loads different editing progress from the auxiliary memory 350 and displays different operating screen to allow the user to edit the first text file.

On the other hand, referring to FIG. 5A again, when the screen 110 of the electronic device 300 displays the home screen 502, the detection module 120 repeatedly determines whether a third input signal corresponding to any thumbnail is detected. The third input signal drives the control module 330 to detect the thumbnail in the home screen 502. The third input signal may be triggered by a corresponding software button or hardware button, wherein the software button may be a delete icon displayed in the thumbnail or an icon displayed anywhere on the screen 110.

When the user does not need to edit the first text file anymore, the user can tap the delete icon in the first thumbnail 510 to trigger a third input signal. Then, the control module 330 removes the first thumbnail 510 from the home screen 502 and deletes the operating information corresponding to the first thumbnail 510 from the auxiliary memory 350.

In summary, the invention provides a method for customizing a user interface and an electronic device thereof. According to the invention, an operating screen of an active application program is captured in response to a user operation, and a thumbnail of the operating screen is displayed in the home screen. Thus, a user can directly get to know about the context of previous using the application program through the thumbnail. When the user taps the thumbnail in the home screen, the application program is executed by resuming the previous status according to the operating information stored in an auxiliary memory through a launching mechanism between the thumbnail and the operating screen. In addition, according to the invention, the active window is actually closed when the thumbnail is constructed. Thus, the window won't occupy any resource of a primary memory, so that the system performance is improved.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for customizing a user interface, adapted to an electronic device (100, 300) having a screen (110), the method comprising:
determining (S210, S410) whether a first input signal is detected when an active window corresponding to an application program is displayed on the screen (110);
when the first input signal is detected, capturing (S220, S420) an operating screen (560) of the active window;
closing (S230) the active window;
establishing (S240, S460) a launching mechanism between a thumbnail (510, 520, 530, 510', 540) of the operating screen (560) and the operating screen (560); and
adding (S250, S470) the thumbnail (510, 520, 530, 510', 540) to a home screen (502) of the user interface and displaying the home screen (502) on the screen (110).

2. The method according to claim 1, wherein the electronic device (300) further comprises a primary memory (340) and an auxiliary memory (350), and the step of closing the active window comprises:
obtaining (S430) an operating information corresponding to the active window from the primary memory (340);
storing (S440) the operating information into the auxiliary memory (350); and
releasing (S450) a space allocated for the active window in the primary memory (340) in order to close the active window.

3. The method according to claim 2, wherein after the step of displaying the home screen (502) on the screen (110), the method further comprises:
determining whether a second input signal corresponding to the thumbnail (510, 520, 530, 510', 540) is detected;
when the second input signal is detected, executing the launching mechanism to load the operating information from the auxiliary memory (350) into the primary memory (340); and
displaying the operating screen (560) through the application program according to the operating information.

4. The method according to claim 2, wherein after the step of displaying the home screen (502) on the screen (110), the method further comprises:
determining whether a third input signal corresponding to the thumbnail (510, 520, 530, 510', 540) is detected;
when the third input signal is detected, removing the thumbnail (510, 520, 530, 510', 540) from the home screen (502); and
deleting the operating information corresponding to the thumbnail (510, 520, 530, 510', 540) from the auxiliary memory (350).

5. The method according to any one of claims 1 to 4, wherein after the step of displaying the home screen (502) on the screen (110), the method further comprises:
re-obtaining a current active window, wherein the current active window is corresponding to the application program;
when the first input signal is detected, capturing the operating screen (560) of the current active window;
closing the current active window;
establishing the launching mechanism between the thumbnail (510, 520, 530, 510', 540) of the operating screen (560) and the operating screen (560); and
adding the thumbnail (510, 520, 530, 510', 540) to the home screen (502) and displaying the home screen (502) on the screen (110).

6. An electronic device (100, 300), comprising:
a screen (110), arranged for displaying an active window corresponding to an application program;
a detection module (120), arranged for detecting a first input signal; and
a control module (130, 330), coupled to the screen (110) and the detection module (120), wherein when the first input signal is detected by the detection module (120), the control module (130) is arranged for capturing an operating screen (560) of the active window, closing the active window, establishing a launching mechanism between a thumbnail (510, 520, 530, 510', 540) of the operating screen (560) and the operating screen (560), adding the thumbnail (510, 520, 530, 510', 540) to a home screen (502) of the user interface, and displaying the home screen (502) on the screen (110).

7. The electronic device (300) according to claim 6, further comprising:
a primary memory (340), coupled to the control module (330); and
an auxiliary memory (350), coupled to the control module (330);
wherein the control module (330) is further arranging for obtaining an operating information corresponding to the active window from the primary memory (340), storing the operating information into the auxiliary memory (350), and releasing a space allocated for the active window in the primary memory (340) in order to close the active window.

8. The electronic device (300) according to claim 7, wherein when a second input signal corresponding to the thumbnail (510, 520, 530, 510', 540) is detected by the detection module (120), the control module (330) is further arranged for executing the launching mechanism to load the operating information from the auxiliary memory (350) into the primary memory (340) and displaying the operating screen (560) through the application program according to the operating information.

9. The electronic device (300) according to claim 7, wherein when a third input signal corresponding to the thumbnail (510, 520, 530, 510', 540) is detected by the detection module (120), the control module (330) is further arranged for removing the thumbnail (510, 520, 530, 510', 540) from the home screen (502) and deleting the operating information corresponding to the thumbnail (510, 520, 530, 510', 540) from the auxiliary memory (350).

10. The electronic device (100, 300) according to any one of claims 6 to 9, wherein the control module (130, 330) is further arranged for re-obtaining a current active window, and the current active window is corresponding to the application program, when the first input signal is detected by the detection module (120), the control module (130, 330) is further arranged for capturing the operating screen (560) of the current active window, closing the current active window, establishing the launching mechanism between the thumbnail (510, 520, 530, 510', 540) of the operating screen (560) and the operating screen (560), adding the thumbnail (510, 520, 530, 510', 540) to the home screen (502), and displaying the home screen (502) on the screen (110).
